# EUROPÄISCHE PATENTSCHRIFT

(11) **EP 3 251 987 B1**
(45) Veröffentlichungstag und Bekanntmachung des Hinweises auf die Patenterteilung: **20.11.2024**
(21) Anmeldenummer: 16172160.0
(22) Anmeldetag: 31.05.2016
(51) Int. Cl.: B65G 57/03, B65G 67/20

(54) **BELADESYSTEM FÜR STÜCKGÜTER MIT TRANSPORTIERBARER BELADEVORRICHTUNG**
LOADING SYSTEM FOR PIECE GOODS WITH TRANSPORTABLE LOADING DEVICE
SYSTEME DE CHARGEMENT POUR MARCHANDISES AU DETAIL COMPRENANT UN DISPOSITIF DE CHARGEMENT TRANSPORTABLE

(43) Veröffentlichungstag der Anmeldung: 06.12.2017
(73) Patentinhaber: Körber Supply Chain Logistics GmbH, 78467 Konstanz (DE)
(72) Erfinder: BERDELLE-HILGE, Peter, 78464 Konstanz (DE)
(74) Vertreter: Müller Schupfner & Partner Patent- und Rechtsanwaltspartnerschaft mbB (Muc)

(56) Entgegenhaltungen:
- EP-A1- 0 655 403
- EP-A1- 1 251 089
- EP-A2- 0 615 925
- EP-A2- 1 462 394
- WO-A1-02/088009
- JP-A- S6 031 445
- NL-C2- 2 009 398
- US-A- 3 040 914
- US-A- 3 651 963
- US-A- 3 836 021
- US-A1- 2011 220 454
- US-A1- 2012 090 957
- US-A1- 2015 117 997
- US-B1- 7 695 235

## Beschreibung

Die Erfindung betrifft ein Beladesystem für Stückgüter, insbesondere Pakete, Postsendungen und Gepäckstücke.

Während viele Prozesse beim Bewegen von Stückgütern in der Logistik, bei Kommissioniertätigkeiten, in Flughafengepäcksortieranlagen und in Postsortieranlagen weitgehend automatisiert ablaufen, wird besonders an Endstellen beim Be- und Entladen noch immer manuell gearbeitet. Insbesondere eine lose Be- und Entladung von Wechselbrücken, Trailern, vergleichbaren Containern oder anderen großvolumigen Transporteinheiten mit Stückgütern erfolgt häufig noch rein manuell durch eine oder mehrere Bedienkräfte. Da das Beladen von Wechselbrücken ein wichtiger und arbeitsintensiver Prozessschritt bei der Verarbeitung von Paketen in Sortierzentren ist, ist ein hoher Automatisierungsgrad bei hohem Durchsatz wünschenswert.

Stand der Technik zur Entlastung der Bediener sind Teleskopförderer, deren Bedienung manuell über eine Steuereinheit erfolgt. Die Teleskopförderer ragen ausreichend weit in den zu be- bzw. entladenden Container hinein und sind horizontal und vertikal schwenkbar, um die Stückgüter dem Bediener zuzuführen. Nach einem automatischen Transport über den Teleskopförderer in den Container hinein müssen die Stückgüter jedoch noch von Hand aufgenommen und bewegt werden.

WO2005110907A1 stellt eine Saugschlauchhebevorrichtung und ein Verfahren zum Bewegen einer Last mit einem Saugschlauchheber vor.

WO2006128405A1 offenbart eine Hubvorrichtung, die bei einer manuellen Verlagerung von Gegenständen wenigstens eine Hand unterstützt, die den Gegenstand greift. WO 02/088009 A1 offenbart ein Beladesystem nach dem Oberbegriff des Anspruchs 1 und einen entsprechendes Verfahren.

Die existierenden Lösungen gehen mit einer geringen Be- und Entladegeschwindigkeit einher, da jedes Stückgut einzeln und durch eine manuelle Steuereinheitsbedienung gegebenenfalls mehrfach in die Hand genommen werden muss. Sie entlasten die Bedienkräfte, erlauben aber keine vollständige Automatisierung.

Da die Paketverarbeitung in den letzten Jahren ein Schwerpunkt der Logistikbranche geworden ist, hat eine bessere Lösung der oben dargestellten Situation insbesondere in Postsortieranlagen grosses Potential.

Der vorliegenden Erfindung liegt daher die Aufgabe zugrunde, eine verbesserte Beladung zu ermöglichen. Diese Aufgabe wird durch die in den unabhängigen Ansprüchen beschriebenen Lösungen gelöst.

Die erfindungsgemäße Lösung sieht ein Beladesystem für Stückgüter gemäss den in Patentanspruch 1 aufgeführten Merkmalen vor.

Um die Ladeeinheit besonders unkompliziert und güterschonend von der Beladevorrichtung auf die zweite Speichereinheit und/ oder von der ersten Speichereinheit auf die Beladevorrichtung zu transferieren, ist die Einbringvorrichtung als in ein in den Boden der Beladevorrichtung integriertes Fördermittel, welches in und/ oder entgegen der Einbringrichtung antreibbar ist, ausgestaltet.

Mit der Einbringvorrichtung kann darüber hinaus eine vollautomatische Einbringung der Ladeeinheit erfolgen.

Um die Stückgüter zu bewegen, insbesondere um eine dichte Stapelung der Ladeeinheit zu erzielen, umfasst das Beladesystem ein Platzierungsmittel, welches adaptiert ist, mindestens zu unterstützen, die Stückgüter während einer Einbringung von der ersten Speichereinheit in den Beladebereich zu bewegen.

Um die Stückgüter vorteilhaft zu bewegen und/ oder zu positionieren und/oder auszurichten, kann gemäß einer Ausführungsform das Platzierungsmittel, mindestens zu unterstützen, die Stückgüter vor und/oder nach einer Einbringung von der ersten Speichereinheit in den Beladebereich bewegen und/oder positionieren und/oder ausrichten.

Eine Ladeeinheit mit nur wenigen Leervolumina ermöglicht eine gute Volumenausnutzung von sowohl den Speichereinheiten, als auch dem Beladebereich der Beladevorrichtung. So kann sowohl der Transport, als auch das Beladen mit hoher Effizienz und somit besonders kostengünstig erfolgen. Bei guter Volumenausnutzung muss auch die Beladevorrichtung weniger oft zwischen den Speichereinheiten hin- und her bewegt werden, wodurch weniger Zeit für den Beladevorgang aufgewendet werden muss. Mit dem Platzierungsmittel kann die Packungsdichte im Beladebereich der Beladevorrichtung im Vergleich zu der auf der ersten Speichereinheit erhöht werden, was auch zu eine Beschädigungsrate der Stückgüter verringert.

Gemäß einer bevorzugten Ausführungsform kann der Boden der Beladevorrichtung vertikal verfahrbar ausgestaltet sein. Dadurch sind bei ortsfester Speichereinheit zwei oder mehr Stückgüter und somit Schichten besonders einfach übereinander aufbaubar, ohne dass die gesamte Beladevorrichtung vertikal bewegt werden muss, was ein besonders gutschonendes Bewegen der Stückgüter ermöglicht. Darüber hinaus ist eine genaue Höhenabstimmung zwischen der ersten und/ oder Speichereinheit und der Beladevorrichtung, vorzugsweise so, dass die Speichereinheit und der Boden der Beladevorrichtung bzw. der obersten vollständig ausgebildeten Schicht bündig abschließen, auf besonders unkomplizierte Weise möglich. Ohne diese Höhenabstimmung würde das Stückgut bei einfachem Hinüberschieben einen Höhenunterschied zwischen Speichereinheit und Beladevorrichtung eventuell fallend überwinden und dabei beschädigt werden.

Um die Anordnung der Stückgüter zu erhalten, eine Beschädigung der Stückgüter durch Herunterfallen und/ oder eine Veränderung des Aufbaus von insbesondere der Ladeeinheit zu verhindern, kann gemäß einer bevorzugten Ausführungsform das Beladesystem mindestens zwei Seitenwände umfassen, welche adaptiert sind, die Ladeeinheit abzustützen, wobei die Seitenwände als Teil der Beladevorrichtung und/ oder als Teil der zweiten Speichereinheit ausgestaltet sind.

Erfindungsgemäß sind die Beladevorrichtung und/ oder die zweite Speichereinheit so ausgestaltet, dass die zweite Speichereinheit die Beladevorrichtung ganz oder zumindest teilweise aufnehmen kann. Auf diese Weise ist kann eine verbesserte Erreichbarkeit günstiger Ablagebereiche erzielt werden, und die Beladevorrichtung kann besonders vorteilhaft zum Überführen der Ladeeinheit positioniert werden. Länge und/ oder Breite und/ oder Höhe der Beladevorrichtung können gemäß einer bevorzugten Ausführungsform auf die erste Speichereinheit und/ oder die zweite Speichereinheit und/ oder die Stückgüter und/ oder die Ladeeinheit abgestimmt sein. Hierdurch kann eine optimale Beladung der zweiten Speichereinheit mit der Beladevorrichtung erzielt werden und das Beladesystem, insbesondere die erste und/ oder die zweite Speichereinheit mit der Beladevorrichtung, ist optimal aufeinander und auf die Stückgüter und somit mögliche Ladeeinheiten abgestimmt.

Um die Stückgüter besonders einfach und sicher zwischen der ersten und/ oder zweiten Speichereinheit und der Beladevorrichtung zu überführen und/ oder zu transportieren, kann gemäß einer bevorzugten Ausführungsform die Beladevorrichtung so ausgestaltet sein, dass der Boden der Beladevorrichtung zeitlich begrenzt oder unbegrenzt ganz oder zumindest teilweise mit der ersten Speichereinheit und/ oder der zweiten Speichereinheit und/ oder einer Stückgüterschicht der zweiten Speichereinheit überlappen oder bündig abschließen kann. So ist die Gefahr eines Herunterfallens und/ oder Verkantens der Stückgüter beim Überführen und Transportieren stark reduziert, da so die Ausbildung einer kritischen Lücke, in der sich die Stückgüter 4 verkannten könnten, ausgeschlossen wird.

Um gemäß einer bevorzugten Ausführungsform eine zentrale und/ oder automatisierte Ansteuerung des Beladesystems zu ermöglichen, kann das Beladesystem eine Steuereinrichtung umfassen, mit welcher das Beladesystem, insbesondere die Beladevorrichtung und/ oder die Einbringvorrichtung, ansteuerbar ist. Auf diese Weise kann das Beladesystem mit geringem personellem Arbeitsaufwand und somit kostengünstig betrieben werden. Hinsichtlich eines Verfahrens wird die vorstehend genannte Aufgabe gelöst durch ein Verfahren zum Überführen von Stückgütern von einer ersten Speichereinheit eines Beladesystems in eine zweite Speichereinheit desselben Beladesystems mittels einer Beladevorrichtung. Das Verfahren umfasst die in Patentanspruch 9 angegebenen Verfahrensschritte.

Damit gemäß einer bevorzugten Ausführungsform die Ladeeinheit vorteilhaft in der zweiten Speichereinheit positioniert werden kann, kann zum Überführen der Ladeeinheit die Beladevorrichtung ganz oder zumindest teilweise von der zweiten Speichereinheit aufgenommen werden. Auf diese Weise können auch Ablagebereiche, die sich im hinteren Bereich der zweiten Speichereinheit befinden, gut erreicht werden.

Gemäß einer bevorzugten Ausführungsform kann vor dem Überführen die auf der Beladevorrichtung aufliegende Ladeeinheit oberhalb dem Ablagebereich der zweiten Speichereinheit positioniert werden. Dadurch muss die Ladeeinheit beim Überführen selber nur sehr wenig bewegt werden, wodurch das Überführen besonders unkompliziert, robust und gutschonend und somit mit geringer Fehleranfälligkeit abläuft.

Gemäß einer bevorzugten Ausführungsform kann zum Überführen durch die Einbringvorrichtung die Ladeeinheit in Einbringrichtung bewegt werden, während die Beladevorrichtung entgegen der Einbringrichtung bewegt wird. Durch diese konzertierten, gleich schnellen und entgegengesetzten Bewegungen der Einbringvorrichtung und der Beladevorrichtung erfolgt ein rein vertikales Ablegen der Ladeeinheit ohne wesentliche horizontale Bewegung beim Einbringen der Ladeeinheit von der Beladevorrichtung in die zweite Speichereinheit selber.

Um die zweite Speichereinheit besonders einfach mit guter Volumenausnutzung zu beladen, können gemäß einer Ausführungsform beim Ausbilden der Ladeeinheit die Stückgüter so ausgerichtet und angeordnet werden, dass eine möglichst hohe Packungsdichte erzielt wird. Da die Ladeeinheit nahezu unverändert in die zweite Speichereinheit überführbar ist, bewirkt die hohe Packungsdichte der Ladeeinheit eine ebenfalls hohe Packungsdichte und somit gute Volumenausnutzung der zweiten Ladeeinheit.

Um auf unkomplizierte Weise eine vertikal mehrschichtige, stabile Ladeeinheit auszubilden, kann gemäß einer bevorzugten Ausführungsform das Ausbilden der Ladeeinheit schichtweise erfolgen, wobei nach dem Ausbilden einer Stückgüterschicht die Beladevorrichtung gesamthaft und/ oder der Boden der Beladevorrichtung und/ oder die erste Speichereinheit vertikal verschoben werden kann.

Bevorzugte Ausführungsformen der Erfindung werden nachfolgend anhand der Figuren beispielsweise näher erläutert. Dabei zeigen:
- Figur 1: skizzenhaft ein Beladesystem;
- Figur 2: ein Beladesystem mit einem in die erste Speichereinheit integrierten Platzierungsmittel;
- Figur 3: ein weiteres Beladesystem mit einem als Greifarm ausgestaltetem Platzierungsmittel;
- Figur 4: ein weiteres Beladesystem mit einem vertikal verfahrbar ausgestaltetem Boden der Beladevorrichtung; und
- Figur 5: das Beladesystem von Figur 4 mit einer weiter ausgebildeten Ladeeinheit und abgesenktem Boden der Beladevorrichtung.

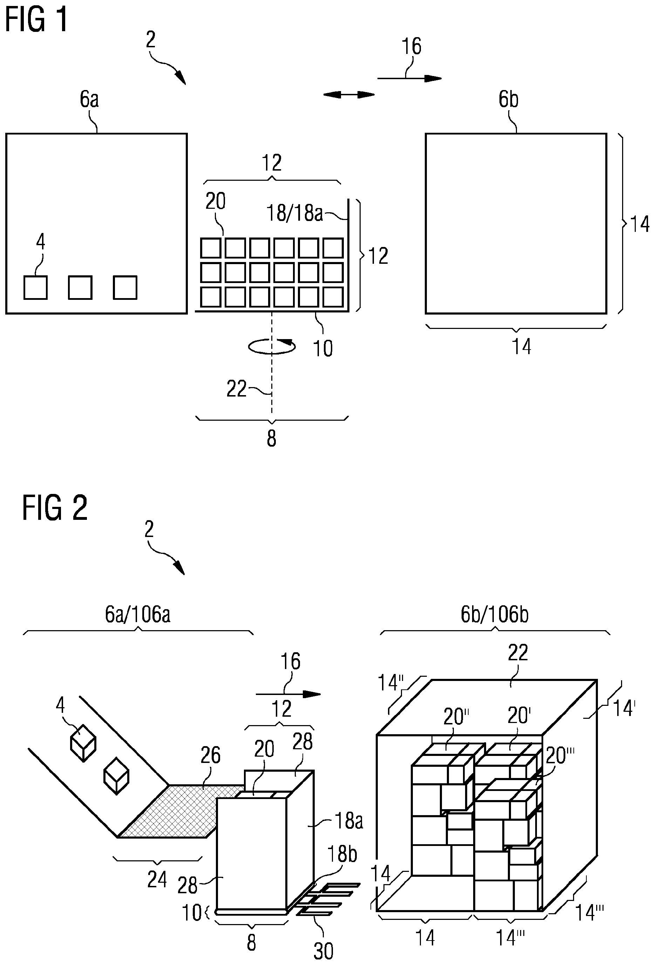

Figur 1 zeigt skizzenhaft ein Beladesystem 2 für Stückgüter 4, insbesondere Pakete, Postsendungen und Gepäckstücke, gemäß einer bevorzugten Ausführungsform der Erfindung. Das Beladesystem 2 umfasst eine erste Speichereinheit 6a, eine zweite Speichereinheit 6b und eine Beladevorrichtung 8. Die Beladevorrichtung 8 ist für eine geordnete Aufnahme von zwei oder mehr Stückgütern 4 als Ladeeinheit 20, vorzugsweise in hoher Packungsdichte, vorgesehen. Die Ladeeinheit 20 umfasst horizontale und/ oder vertikale Schichten von Stückgütern 4. Die Stückgüter 14 werden in einem Beladebereich 12 angeordnet der oberhalb eines Bodens 10 der Beladevorrichtung 8 angeordnet ist. Die Beladevorrichtung 8 ist adaptiert zur Aufnahme von mindestens einem, vorzugsweise aber mehreren Stückgütern 4. Prinzipiell ist der gesamte Beladebereich 12 mit Stückgütern 4 befüllbar. Die Stabilität der gebildeten Ladeeinheit 20 bestimmt die Größe des Beladebereichs 12 mit. Die Stückgüter 4 können bereits auf der ersten Speichereinheit 6a oder aber auch erst auf dem Beladebereich 12 der Beladevorrichtung 8 ausgerichtet, positioniert und/ oder angeordnet werden mit dem Ziel einer hohen Packungsdichte. Die Beladevorrichtung 8 ist als Überführglied transportierbar zwischen der ersten Speichereinheit 6a und der zweiten Speichereinheit 6b ausgestaltet. Die zweite Speichereinheit 6b umfasst einen oder mehrere Ablagebereiche 14, die zur Aufnahme der Stückgüter 4 als eine oder mehrere Ladeeinheiten 20 vorgesehen sind.

Zunächst wird der Beladebereich 12 von der ersten Speichereinheit 6a aus mit Stückgütern 4 beladen. Die Beladevorrichtung 8 umfasst eine Einbringvorrichtung 18, welche adaptiert ist, die Stückgüter 4 aus dem Beladebereich 12 zumindest teilweise, also nur einzelne Stückgüter 4 der Ladeeinheit 20 oder die gesamte Ladeeinheit 20 gesamthaft, und im Wesentlichen unverändert als Ladeeinheit 20 in den Ablagebereich 14 zu überführen. Die Einbringvorrichtung 18 ist als eine bewegliche Rückwand 18a ausgestaltet, welche zum Überführen bzw. Einbringen der Ladeeinheit 20 in die zweite Speichereinheit 6b verschoben wird. Zum Beladen der Stückgüter 4 von der ersten Speichereinheit 6a auf die Beladevorrichtung 8 wird die Beladevorrichtung 8 wie in Figur 1 dargestellt so positioniert, dass die Einbringvorrichtung 18 das Einbringen nicht behindert. Im Anschluss wird die Beladevorrichtung 8 um ihre Drehachse 22 rotiert und hin zu der zweiten Speichereinheit 6b transportiert, wobei diese Bewegungen sequentiell oder konzertiert durchgeführt werden können.

Eine Rotation der Beladevorrichtung 8 um ihre Drehachse 22 kann prinzipiell auch schon beim Beladen durchgeführt werden, um eine verbesserte Erreichbarkeit einzelner Bereiche des Beladebereichs 12 zu erzielen.

Die Beladevorrichtung 8 wird anschließend vor der oder in die zweite Speichereinheit 6b hinein positioniert. Die Stückgüter 4 werden als Ladeeinheit 20 entlang einer Einbringrichtung 16 aus dem Beladebereich 12 in den Ablagebereich 14 überführt, die Beladevorrichtung 8 und/ oder die zweite Speichereinheit 6b sind für eine entsprechendes Überführbarkeit der Stückgüter 4 ausgestaltet. Die verschiebbare Rückwand 18a der Einbringvorrichtung 18 ist in und entgegen der Einbringrichtung 16 verschiebbar und wird zum Einbringen der Ladeeinheit 20 in den Ablagebereich 14 in Einbringrichtung 16 bewegt.

Prinzipiell könnte die Ladeeinheit 20 auch nur ein Stückgut 4 umfassen und die Beladevorrichtung 8 somit auch nur für die Überführung von einem einzelnen Stückgut 4 von der ersten Speichereinheit 6a in die zweite Speichereinheit verwendet werden. Dies würde jedoch die Effizienz der Überführung verringern, da die Beladevorrichtung 8 bei einer gleichzeitigen Überführung von zwei oder mehr Stückgütern 4 weniger oft hinund herbewegt werden muss, als wenn jeweils nur ein Stückgut 4 von der Beladevorrichtung 8 überführt wird. Der stückgutbezogene Arbeitsaufwand ist also geringer.

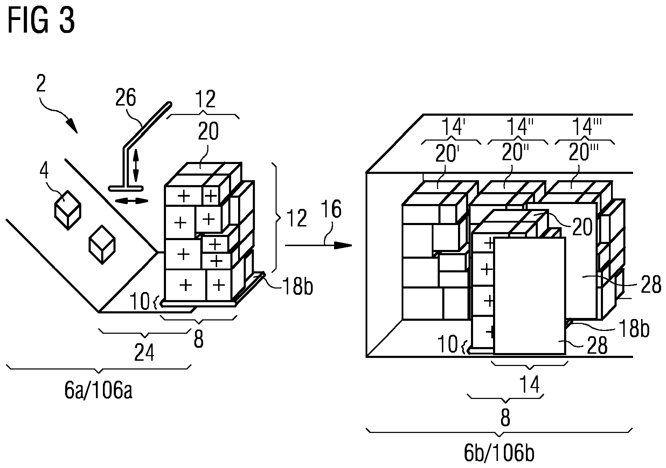

Figur 2 zeigt gemäß einer bevorzugten Ausführungsform der Erfindung ein Beladesystem 2 mit einem Platzierungsmittel 26. Die erste Speichereinheit 6a ist als Transportrutsche 106a ausgestaltet, über welche die zwei Stückgüter 4, die sich auf der Transportrutsche 106a befinden, hin zur Beladevorrichtung 8 transportiert werden. Um die Ladeeinheit 20 vollständig so auszubilden, dass das gesamte Volumen des Beladebereichs 12 ausgenutzt wird, könnten noch zwei weitere Stückgüter 4 auf die Beladevorrichtung 8 geladen werden. Das Platzierungsmittel 26 ist in die Rutschenendstelle der ersten Speichereinheit 6a integriert. Auch sind nur einzelne Bereiche des Platzierungsmittel 26 ansteuerbar, daher ist die Rutschenendstelle 24 und somit die erste Speichereinheit 6a auch als Zwischenspeicher verwendbar. Das Platzierungsmittel 26 ist adaptiert, die Stückgüter 4 zu positionieren und auszurichten oder dies zumindest zu unterstützen. Hierzu werden die Stückgüter 4 vom Platzierungsmittel 26 bewegt, je nach Ausgestaltung entweder auf der ersten Speichereinheit 6a, auf der Beladevorrichtung 8 oder aber das Platzierungsmittel 26 übernimmt gänzlich das Überführen der Stückgüter 4 von der ersten Speichereinheit 6a auf die Beladevorrichtung 8 wie der in Figur 3 dargestellte Greifarm.

Das Platzierungsmittel 26 ist als Kugelrollentisch ausgestaltet und adaptiert, die Stückgüter 4 vor und/ oder während einer Einbringung von der Rutschenendstelle 24 in den Beladebereich 12 zu bewegen und/ oder zu positionieren und/ oder auszurichten. Ein zusätzliches Bewegen, Positionieren und Ausrichten beim Beladen erfolgt durch horizontale und/ oder vertikale Bewegung der Beladevorrichtung 8 mit einem Gabelstapler 30. Optional kann zusätzlich auch noch die Rutschenendstelle 24 horizontal und/ oder vertikal verstellbar sein. Beim Beladen sind Beladevorrichtung 8 und erste Speichereinheit 6a so angeordnet, dass die Oberseite der obersten Schicht des bereits ausgebildeten Teils der Ladeeinheit 20 und somit der befüllte Teil der Beladevorrichtung 8 und die Rutschenendstelle 24 nahezu bündig abschließen. Die Ausbildung von einer Schicht der Ladeeinheit 20 kann erst auf der Beladevorrichtung 8 erfolgen, oder aber bereits auf der Rutschenendstelle 24 und somit der ersten Speichereinheit 6a. Bei einer Ausbildung einer Schicht bereits auf der ersten Speichereinheit 6a wird diese Schicht gesamthaft und somit mehr als ein Stückgut 4 zugleich auf die Beladevorrichtung 8 überführt.

Nach dem Beladen des oberhalb des Bodens 10 der Beladevorrichtung 8 angeordneten Beladebereichs 12 mit den Stückgütern 4 und dem Ausbilden der Ladeeinheit 20, die hier aus horizontalen und vertikalen Schichten von Stückgütern 4 ausgebildet ist, erfolgt ein Transport der Beladevorrichtung 8 von der ersten Speichereinheit 6a zur zweiten Speichereinheit 6b. Mit dem Gabelstapler 30 wird die Beladevorrichtung 8 hin zur als Wechselbrücke 106b ausgestalteten zweiten Speichereinheit 6b transportiert um in den Ablagebereich 14 überführt zu werden. Auf diese Weise erfolgt ein gesamthaftes Überführen der Stückgüter 4 als Ladeeinheit 20 durch Verwendung der Beladevorrichtung 8 von der ersten Speichereinheit 6a in die zweite Speichereinheit 6b. Das Überführen erfolgt in Einbringrichtung vom Beladebereich 12 in den Ablagebereich 14, während der Boden 10 der Beladevorrichtung 8 mit der zweiten Speichereinheit 6b bündig abschließt oder überlappt. Der Gabelstapler 30 agiert somit als Transportvorrichtung, wobei auch andere Transportvorrichtungsausgestaltungen, beispielsweise Förderschienen oder diverse Hebevorrichtungsausgestaltungen möglich sind.

Anstelle eines Transport der Beladevorrichtung 8 von der ersten Speichereinheit 6a zur zweiten Speichereinheit 6b zum Überführen könnte auch die Beladevorrichtung 8 ortsfest bleiben und gegebenenfalls rotiert werden und die erste Speichereinheit 6a und/ oder die zweite Speichereinheit 6b transportiert und positioniert werden. Bei allen dargestellten Lösungen erfolgt nach dem Ausbilden der Ladeeinheit 20 eine Anordnung des Beladesystems 2 zum Überführen.

Um die Stabilität der Ladeeinheit 20 zu erhöhen und so insbesondere ein Herunterfallen von einzelnen Stückgütern 4 oder der gesamten Ladeeinheit 20 zu verhindern, sind an der Beladevorrichtung 8 Seitenwände 28 als Teil ebendieser angebracht. Die Seitenwände 28 sind zum Abstützen der Stückgüter 4 auf der Beladevorrichtung 8 ausgestaltet. Die Höhe der Seitenwände 28 bestimmt die Höhe des Beladebereichs 12 und somit die maximal zulässige Schichthöhe von den die Ladeeinheit 20 ausbildenden Stückgütern 4. Zur zusätzlichen Stabilisierung dient die als Einbringvorrichtung 18 ausgestaltete verschiebbare Rückwand 18a. Die Einbringvorrichtung umfasst zudem ein in den Boden 10 der Beladevorrichtung 8 integriertes Fördermittel 18b. Das Fördermittel 18b ist in und/ oder entgegen der Einbringrichtung 16 antreibbar ausgestaltet. Beim Transport der Beladevorrichtung 8 weist die Seite der Beladevorrichtung 8 vom Gabelstapler 30 weg, die weder Seitenwand 28 noch Rückwand 18a aufweist. Zur zusätzlichen Stabilitätserhöhung ist die Beladehilfe 8 während des Transports zum Gabelstapler 30 und zur Rückwand 18a hin kippbar ausgestaltet, um einem Herausfallen von Stückgütern 4 entgegen zu wirken. Eine vertikale Verfahrbarkeit des Bodens 10 der Beladevorrichtung 8 ermöglicht eine Höhenabstimmung zum Ein- und/ oder Ausbringen einzelner Stückgüter 4 oder der gesamten Ladeeinheit 20 ohne eine Bewegung der gesamten Beladevorrichtung 8, insbesondere auch ohne Bewegung von Seitenwand 28 und Rückwand 18a.

Bei unterschiedlich dimensionierten Stückgütern 4 kann die Stabilität der Stapelung der Stückgüter 4 in der zweiten Speichereinheit 6b erhöht werden, indem die oberste Schicht der ersten Ladeeinheit 20 auf der Beladevorrichtung 8 so ausgebildet wird, dass ihre Oberfläche zur Rückwand 18a hin ansteigend ist. Bei Ablage einer weiteren, hier nicht dargestellten Ladeeinheit 20ʺʺ auf dieser ersten Ladeeinheit 20 werden die Stückgüter 4 die Tendenz haben, sich in der zweiten Speichereinheit 6b weg vom Gabelstapler 30 in Einbringrichtung 16 zu neigen.

Um die Speicherkapazität des Beladesystems 2 noch weiter zu erhöhen, kann das Beladesystem 2 mehr als eine Beladevorrichtung 8 umfassen und diese zunächst mit dem Gabelstapler 30 oder einer anderen Transportvorrichtung zu einem weiteren Speicherplatz transportiert und dort zwischen gelagert werden. So können die Beladevorrichtungen 8 als erweiterte Speichervorrichtung dienen.

Zum gesamthaften oder zumindest teilweisen Überführen der Ladeeinheit 20 wird die Beladevorrichtung 8 zunächst vollständig oder nahezu vollständig von der zweiten Speichereinheit 6b aufgenommen. Die Beladevorrichtung 8 wird vor dem Überführen mit Hilfe des Gabelstaplers 30 oberhalb vom Ablagebereich 14 positioniert, so dass die Ladeeinheit mit Hilfe der Einbringvorrichtung 18 durch Verschieben der Rückwand 18a und/ oder Antreiben des Fördermittels 18b in den Ablagebereich 14 überführt werden kann. Bei einer Positionierung direkt oberhalb vom Ablagebereich 14 erfolgt so ein nahezu rein vertikales Ablegen der Ladeeinheit 20. Dadurch, dass keine horizontale Bewegung der Ladeeinheit 20 gegenüber der zweiten Speichereinheit 6b erfolgt, während die Beladevorrichtung 8 mit ebenfalls dieser Einbringgeschwindigkeit oder einer anderen Geschwindigkeit entgegen der Einbringrichtung 16 bewegt wird, bleibt der Aufbau der Ladeeinheit 20 ganz oder zumindest nahezu erhalten. Das vertikale Ablegen der Ladeeinheit 20 ist für einen Erhalt der Stückgüteranordnung der Ladeeinheit 20 insbesondere bei unebenem Boden des Ablagebereiches 14, was beispielsweise bei einer vertikalen Stapelung von Ladeeinheiten 20 auftritt, wichtig. Dank dem Fördermittel 18b und der Bewegung der gesamten Beladevorrichtung 8 entgegen der Einbringrichtung 16 müssen die Stückgüter 4 der Ladeeinheit 20 weder über den Boden 10 der Beladevorrichtung 8, noch über eventuelle Unebenheiten der zweiten Speichereinheiten 6b oder bereits in der zweiten Speichereinheit 6b gelagerten Stückgüter 4 geschoben werden.

Weitere Ladeeinheiten 20', 20", 20‴ wurden bereits zuvor von der Beladevorrichtung 8 in weitere Ablagebereiche 14', 14", 14‴ überführt. Zumindest zum Überführen in die hinteren Ablagebereiche 14', 14‴ ist es erforderlich, dass die zweite Speichereinheit 6b die Beladevorrichtung 8 vollständig aufnehmen kann. Zum Überführen der vorderen Ladeeinheiten 20, 20" in die vorderen Ablagebereiche 14, 14" ist auch eine bündige Positionierung von Beladevorrichtung 8 und zweiter Speichereinheit 6b ausreichend. Durch Abstimmung ihrer Dimensionen sind zweite Speichereinheit 6b und/ oder die Beladevorrichtung 8 für eine Überführbarkeit ineinander adaptiert und ausgestaltet. Eine zusätzliche Abstimmung auf die Dimension der Ladeeinheiten 20 - 20‴ kann das Beladesystem 2 noch weiter optimieren.

In Figur 2 sind sowohl Länge, als auch Breite und Höhe von der Beladevorrichtung 8, der ersten Speichereinheit 6a, der zweiten Speichereinheit 6b und den Stückgütern 4 und somit der ausgebildeten Ladeeinheit 20 aufeinander abgestimmt. Es passen vier Stückgüter 4, je zwei nebeneinander, in einer Schicht und vier Schichten übereinander auf die Beladevorrichtung 8. Darüber hinaus ist die zweite Speichereinheit 6b zu Aufnahme von vier Ladeeinheiten 20, 20', 20", 20‴ ausgestaltet. Vorteilhafterweise sind Länge und/ oder Breite und/ oder Höhe der Beladevorrichtung auf die erste Speichereinheit und/ oder die zweite Speichereinheit und/ oder die Stückgüter abgestimmt.

Figur 3 zeigt gemäß einer bevorzugten Ausführungsform der Erfindung ein weiteres Beladesystem 2 mit einem als Hebevorrichtung, beispielsweise als Saugschlauchhebevorrichtung oder als Greifarm, ausgestalteten Platzierungsmittel 26. Die erste Speichereinheit 6a ist wie in Figur 2 wiederum als Transportrutsche 106a, die zweite Speichereinheit 6b wiederum als Wechselbrücke 106b. Beim Beladen, also zeitlich begrenzt, wird die Beladevorrichtung 8 zumindest teilweise auf die Rutschenendstelle 24 der Transportrutsche 106a positioniert, so dass der Boden 10 der Beladevorrichtung 8 auf diese Weise zumindest teilweise mit der ersten Speichereinheit 6a überlappt. Durch die Ausgestaltung des Platzierungsmittels 26 als Greifarm, die neben einer horizontalen auch eine vertikale Bewegung der Stückgüter 4 erlaubt, ist die Positionierung der Beladevorrichtung 8 während des Ausbildens der Ladeeinheit 20 nicht von solcher Wichtigkeit wie wenn das Platzierungsmittel 26 die Stückgüter 4 nur horizontal bewegt. Prinzipiell könnte die Beladevorrichtung 8 auch weiter unterhalb und/ oder weiter rechts in Figur 3 angeordnet sein. Bei einem Ausfall des Greifarms würde durch die Positionierung auf der Rutschendstelle 24 ein Stückgut 4 jedoch nur auf die Rutschendstelle 24 selber fallen und somit weniger stark beschädigt werden. Während der Ausbildung der Ladeeinheit 20 wird bei Anordnung wie in Figur 3 die Beladevorrichtung 8 von der ersten Speichereinheit 6a bzw. ihrer Rutschenendstelle 24 gestützt und muss so während des Beladens nicht aktiv gehalten werden.

Das Platzierungsmittel 26 greift die Stückgüter 4 und hebt sie auf die Beladevorrichtung, kann die Stückgüter 4 also sowohl horizontal, als auch vertikal bewegen, positionieren und dabei zugleich ausrichten. Das Platzierungsmittel 26 kommt somit vor, während und nach der Einbringung eines Stückgutes 4 von der ersten Speichereinheit in den Beladebereich 12 zum Einsatz. Das als Kugelrollentisch ausgestaltete Platzierungsmittel von Figur 2 kann nur vor und/ oder während der Einbringung zum Einsatz. Im Gegensatz dazu kann das in Figur 2 dargestellte, in die Rutschenendstelle 24 integrierte Platzierungsmittel 26 die Stückgüter 4 nur horizontal positionieren und ausrichten. Das in Figur 3 dargestellte Platzierungsmittel 26 ist zudem adaptiert, auch die gesamte Beladevorrichtung 8 samt Ladeeinheit 20 hin zur zweiten Speichereinheit 6b oder ganz oder zumindest teilweise in die zweite Speichereinheit 6b hinein zu bewegen.

Beim Überführen der Ladeeinheit 20 von der Beladevorrichtung in die zweite Speichereinheit 6b sorgen die als Teil der zweiten Speichereinheit 6b ausgestalteten Seitenwände 28 für zusätzliche Stabilität der Ladeeinheit 20. Da die Bewegung der Beladevorrichtung 8 samt Ladeeinheit 20 ohne nennenswerte Stabilisierungsmittel erfolgt, kann es bei nur geringerer Stabilität der ausgebildeten Ladeeinheit 20 vorteilhaft sein, nur einschichtige Ladeeinheiten 20 auszubilden und den Beladeprozess mehrfach zu wiederholen.

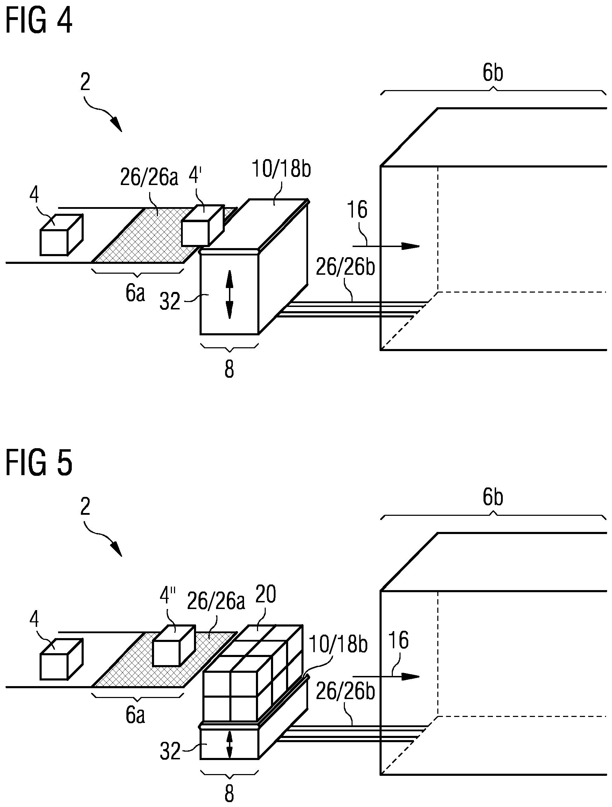

Figur 4 zeigt gemäß einer bevorzugten Ausführungsform der Erfindung ein weiteres Beladesystem 2 mit einem in die erste Speichereinheit 6a integrierten Platzierungsmittel 26a und einem vertikal verfahrbar ausgestaltetem Boden 10 der Beladevorrichtung 8. Die Endstelle der ersten Speichereinheit 6a umfasst ein integriertes, als Kugelrollentisch 26a ausgestaltetes Platzierungsmittel 26. Die erste Speichereinheit 6a ist als Transportrutsche 106a ausgestaltet.

Die Beladevorrichtung 8 ist durch ein als Schienen 26b ausgestaltetes Platzierungsmittel 26 horizontal positionierbar. Die Beladevorrichtung 8 umfasst zudem eine Hubvorrichtung 32 mit der die Beladevorrichtung 8 und somit ihr Boden vertikal verfahrbar ausgestaltet ist. Zunächst ist die Hubvorrichtung 32 so eingestellt, dass der Boden 10 der Beladevorrichtung 8 und die erste Speichereinheit 6a bündig und auf gleicher Ebene angeordnet sind.

Ein Stückgut 4` liegt gerade auf der zweiten Speichereinheit und dem Boden 10 der Beladevorrichtung 8 auf. Mittels dem Kugelrollentisch 26a oder zumindest unter seiner Zuhilfenahme, wobei das Stückgut 4' auch rein manuell ohne aktives Antreiben auf dem Kugelrollentisch 26a bewegt werden kann, wird die Ausrichtung und Position des Stückguts 4` beim Beladen bestimmt. Der weitere Verlauf eines Ausbildens der Ladeeinheit 20 wird in Figur 5 dargestellt, wobei das Ausbilden der Ladeeinheit 20 mit dem Ziel einer möglichst hohen Packungsdichte erfolgt.

Figur 5 zeigt gemäß einer bevorzugten Ausführungsform der Erfindung das Beladesystem von Figur 4 mit einer weiter ausgebildeten Ladeeinheit 20 und im Vergleich zu Figur 4 abgesenkter Beladevorrichtung 8 bzw. abgesenktem Boden 10.

Die Ausbildung der Ladeeinheit 20 erfolgte schichtweise. Zunächst wurde die unterste Stückgüterschicht der Ladeeinheit 20 vollständig ausgebildet. Im Anschluss wurde die Beladevorrichtung 8 durch die Hubvorrichtung 32 solange abgesenkt, bis die Stückgüterschicht wieder weitgehend bündig mit der ersten Speichereinheit 6a ist. Wenn die Beladevorrichtung 8 wie in Figur 2 Seitenwände 28 umfasst, ist es für die Stabilität der Ladeeinheit 20 vorteilhaft, nur den Boden 10 der Beladevorrichtung 8 und nicht die Seitenwände 28 abzusenken. Anstelle der Beladevorrichtung 8 könnte prinzipiell auch die erste Speichereinheit 6a vertikal verschiebbar ausgestaltet sein, wobei auch beides möglich ist. Jede weitere Stückgüterschicht wird innerhalb des Beladebereichs 12 der Beladevorrichtung 8 auf einer bereits ausgebildeten Stückgüterschicht aufgebaut.

Um bei großer Variation der Stückgütermaße eine vorteilhafte Volumenausnutzung der zweiten Speichereinheit 6b zu erzielen, wird gemäß einer Ausführungsform der Beladebereich 12 der Beladevorrichtung 8 mit kleinen Stückgütern 4 zugeschüttet, die bereits zuvor kleiner einer Grenzgröße aussortiert und/ oder zwischengespeichert und/ oder bereits derart getrennt angeliefert wurden.

Gemäß einer bevorzugten Ausführungsform kann die Beladevorrichtung 8 mindestens ein Stückgut 4 in einer Schicht aufnehmen, so dass die Länge der Beladevorrichtung 8 einer einfachen oder vielfachen maximalen Länge eines Stückgutes 4 entspricht. Wenn die Breite der Beladevorrichtung 8 maximal halb so breit wie die Breite einer Wechselbrücke 106b, kann die Beladevorrichtung 8 vollständig oder zumindest teilweise in die Wechselbrücke 106b eingeführt werden. Auch die Höhe der Beladevorrichtung 8 ist vorteilhafterweise maximal halb so breit wie die Höhe der Wechselbrücke 106b.

Gemäß einer weiteren bevorzugten Ausführungsform ist das Beladesystem 2 so ausgestaltet, dass Länge und/ oder Breite und/ oder Höhe der Beladevorrichtung 8, der ersten Speichereinheit 6a, der zweiten Speichereinheit 6b und/ oder die Stückgüter 4 ganzzahligen Teiler oder Vielfach voneinander sind.

Um ein zentralisiertes und/ oder automatisiertes Ansteuern zu ermöglichen, umfasst das Beladesystem 2 gemäß einer weiteren Ausführungsform eine Steuereinrichtung, mit welcher das Beladesystem 2, insbesondere die Beladevorrichtung 8 und/ oder die Einbringvorrichtung 18, ansteuerbar ist. Für ein vollständig oder zumindest teilweise automatisiertes Ansteuern umfasst das Beladesystem 2 mindestens einen Detektor.

Gemäß einer Ausführungsform ist die erste Speichereinheit 6a eine Endstelle in einer Transport- oder Sortieranlage. Die zweite Speichereinheit 6b kann eine großvolumige Transporteinheit, also beispielsweise ein Container oder die bereits eingeführte Wechselbrücke 106b, aber ein einfacher Speicherplatz, beispielsweise ein Regalfach, sein.

Das Beladen der Beladevorrichtung 8 kann gemäß einer Ausführungsform auch gleichzeitig mit mehreren Stückgütern 4 erfolgen, welche von einer oder mehreren ersten Speichereinheiten 6a stammen. Bei einem gleichzeitigen Beladen ausgehend von einer einzigen Speichereinheit 6a erfolgt vorteilhafterweise eine Beladen von mehreren Seiten mit einer kragenartigen ausgestalteten Anordnung der Endstelle der ersten Speichereinheit.

### Bezugszeichenliste

- 2: Beladesystem
- 4: Stückgut
- 6: Speichereinheit
- 8: Beladevorrichtung
- 10: Boden der Beladevorrichtung 8
- 12: Beladebereich
- 14: Ablagebereich
- 16: Einbringrichtung
- 18: Einbringvorrichtung
- 18a: verschiebbare Rückwand der Einbringvorrichtung 18
- 18b: Fördermittel der Einbringvorrichtung 18
- 20: Ladeeinheit
- 22: Drehachse der Beladevorrichtung 8
- 24: Rutschenendstelle
- 26: Platzierungsmittel
- 28: Seitenwände
- 30: Gabelstapler
- 32: Hubvorrichtung
- 106a: Transportrutsche
- 106b: Wechselbrücke

## Patentansprüche

1. Beladesystem (2) für Stückgüter (4), insbesondere Pakete, Postsendungen und Gepäckstücke, umfassend eine erste Speichereinheit (6a), eine zweite Speichereinheit (6b), insbesondere eine Wechselbrücke (106b), und eine Beladevorrichtung (8), wobei
a) die Beladevorrichtung (8) einen Boden (10) und einen Beladebereich (12) umfasst;
b) der Beladebereich (12) oberhalb des Bodens (10) der Beladevorrichtung (8) angeordnet ist und für eine Aufnahme der Stückgüter (4) vorgesehen ist;
c) die Beladevorrichtung (8) als Überführglied zwischen der ersten Speichereinheit (6a) und der zweiten Speichereinheit (6b) ausgestaltet ist;
d) die zweite Speichereinheit (6b) mindestens einen Ablagebereich (14) umfasst;
e) die Beladevorrichtung (8) und/ oder die zweite Speichereinheit (6b) so ausgestaltet sind, dass die Beladevorrichtung (8) so positionierbar ist, dass die Stückgüter (4) entlang einer Einbringrichtung (16) aus dem Beladebereich (12) in den Ablagebereich (14) überführbar sind; und
f) die Beladevorrichtung (8) eine Einbringvorrichtung (18) umfasst, welche adaptiert ist, die Stückgüter (4) aus dem Beladebereich (12) zumindest teilweise als Ladeeinheit (20) in den Ablagebereich (14) zu überführen;
wobei die Einbringvorrichtung (18) als ein in den Boden (10) der Beladevorrichtung (8) integriertes Fördermittel (18b), welches in und/oder entgegen der Einbringrichtung (16) antreibbar ist, ausgestaltet ist;
wobei die Beladevorrichtung (8) und/ oder die zweite Speichereinheit (6b) so ausgestaltet sind, dass die zweite Speichereinheit (6b) die Beladevorrichtung (8) ganz oder zumindest teilweise aufnehmen kann, und
**dadurch gekennzeichnet, dass**
das Beladesystem (2) ein Platzierungsmittel (26) umfasst, welches adaptiert ist, mindestens zu unterstützen, die Stückgüter (4) während einer Einbringung von der ersten Speichereinheit (6a) in den Beladebereich (12) zu bewegen.

2. Beladesystem (2) nach Anspruch 1, **dadurch gekennzeichnet, dass**
die Einbringvorrichtung (18) zudem eine in und entgegen der Einbringrichtung (16) verschiebbare Rückwand (18a) der Beladevorrichtung (8) umfasst.

3. Beladesystem (2) nach einem der Ansprüche 1 bis 2, **dadurch gekennzeichnet, dass**
das Platzierungsmittel (26) adaptiert ist, mindestens zu unterstützen, die Stückgüter (4) vor und/ oder nach einer Einbringung von der ersten Speichereinheit (6a) in den Beladebereich (12) zu bewegen und/ oder zu positionieren und/ oder auszurichten.

4. Beladesystem (2) nach einem der Ansprüche 1 bis 3, **dadurch gekennzeichnet, dass**
der Boden (10) der Beladevorrichtung (8) vertikal verfahrbar ausgestaltet ist.

5. Beladesystem (2) nach einem der Ansprüche 1 bis 4, **dadurch gekennzeichnet, dass**
das Beladesystem (2) mindestens zwei Seitenwände (28) umfasst, welche adaptiert sind, die Ladeeinheit (20) abzustützen, wobei die Seitenwände (28) als Teil der Beladevorrichtung (8) und/ oder als Teil der zweiten Speichereinheit (6b) ausgestaltet sind.

6. Beladesystem (2) nach einem der Ansprüche 1 bis 5, **dadurch gekennzeichnet, dass**
Länge und/ oder Breite und/ oder Höhe der Beladevorrichtung (8) auf die erste Speichereinheit (6a) und/ oder die zweite Speichereinheit (6b) und/ oder die Stückgüter (4) und/ oder die Ladeeinheit (20) abgestimmt sind.

7. Beladesystem (2) nach einem der Ansprüche 1 bis 6, **dadurch gekennzeichnet, dass**
die Beladevorrichtung (8) so ausgestaltet ist, dass der Boden (10) der Beladevorrichtung (8) zeitlich begrenzt oder unbegrenzt ganz oder zumindest teilweise mit der ersten Speichereinheit (6a) und/ oder der zweiten Speichereinheit (6b) und/ oder einer Stückgüterschicht der zweiten Speichereinheit (6b) überlappen oder bündig abschließen kann.

8. Beladesystem (2) nach einem der Ansprüche 1 bis 7, **dadurch gekennzeichnet, dass**
das Beladesystem (2) eine Steuereinrichtung umfasst, mit welcher das Beladesystem (2), insbesondere die Beladevorrichtung (8) und/ oder die Einbringvorrichtung (18), ansteuerbar ist.

9. Verfahren zum Überführen von Stückgütern (4) von einer ersten Speichereinheit (6a) eines Beladesystems (2) in eine zweite Speichereinheit (6b) desselben Beladesystems (2) mittels einer Beladevorrichtung (8), umfassend die Verfahrensschritte:
a) Beladen eines oberhalb eines Bodens (10) der Beladevorrichtung (8) angeordneten Beladebereichs (12) mit Stückgütern (4), wobei ein Platzierungsmittel (26) ein Überführen der Stückgüter (4) von der ersten Speichereinheit (6a) auf die Beladevorrichtung (8) übernimmt;
b) Ausbilden einer Ladeeinheit (20) der Stückgüter (4) im Beladebereich (12);
c) Anordnung des Beladesystems (2) zum Überführen;
d) zumindest teilweises Überführen der Ladeeinheit (20) von dem Beladebereich (12) der Beladevorrichtung (8) in einen Ablagebereich (14) der zweiten Speichereinheit (6b) entlang einer Einbringrichtung (16) mittels einer Einbringvorrichtung (18), wobei die Einbringvorrichtung (18) als in ein in den Boden (10) der Beladevorrichtung (8) integriertes Fördermittel (18b), welches in und/oder entgegen der Einbringrichtung (16) antreibbar ist, ausgestaltet ist und
zum Überführen der Ladeeinheit (20) die Beladevorrichtung (8) ganz oder zumindest teilweise von der zweiten Speichereinheit (6b) aufgenommen wird.

10. Verfahren nach Anspruch 9, **dadurch gekennzeichnet, dass** vor dem Überführen wird die auf der Beladevorrichtung (8) aufliegende Ladeeinheit (20) oberhalb dem Ablagebereich (14) der zweiten Speichereinheit (6b) positioniert.

11. Verfahren nach einem der Ansprüche 9 bis 10, **dadurch gekennzeichnet, dass**
zum Überführen durch die Einbringvorrichtung (18) die Ladeeinheit (20) in Einbringrichtung (16) bewegt wird, während die Beladevorrichtung (8) entgegen der Einbringrichtung (16) bewegt wird.

12. Verfahren nach einem der Ansprüche 9 bis 11, **dadurch gekennzeichnet, dass**
beim Ausbilden der Ladeeinheit (20) die Stückgüter (4) so ausgerichtet und angeordnet werden, dass eine möglichst hohe Packungsdichte erzielt wird.

13. Verfahren nach einem der Ansprüche 9 bis 12, **dadurch gekennzeichnet, dass**
das Ausbilden der Ladeeinheit (20) schichtweise erfolgt, wobei nach dem Ausbilden einer Stückgüterschicht die Beladevorrichtung (8) gesamthaft und/ oder der Boden (10) der Beladevorrichtung (8) und/ oder die erste Speichereinheit (6a) vertikal verschoben wird.

14. Verfahren nach einem der Ansprüche 9 bis 13, **dadurch gekennzeichnet, dass**
die Ladeeinheit (20) zusätzlich durch Verschieben einer von der Einbringvorrichtung (18) umfassten Rückwand (18a) in den Ablagebereich (14) überführt wird.

## Claims

1. Loading system (2) for piece goods (4), in particular parcels, postal items and items of luggage, comprising a first storage unit (6a), a second storage unit (6b), in particular a swap body (106b), and a loading device (8), wherein
a) the loading device (8) comprises a base (10) and a loading area (12);
b) the loading area (12) is arranged above the base (10) of the loading device (8) and is provided for receiving the piece goods (4);
c) the loading device (8) is designed as a transfer member between the first storage unit (6a) and the second storage unit (6b);
d) the second storage unit (6b) comprises at least one depositing area (14);
e) the loading device (8) and/or the second storage unit (6b) are designed such that the loading device (8) can be positioned such that the piece goods (4) can be transferred along an insertion direction (16) from the loading area (12) into the depositing area (14); and
f) the loading device (8) comprises an insertion device (18) which is adapted to transfer the piece goods (4) from the loading area (12) at least partially as a loading unit (20) into the depositing area (14);
wherein the insertion device (18) is designed as a conveyor means (18b) which is integrated in the base (10) of the loading device (8) and which can be driven in and/or against the insertion direction (16);
wherein the loading device (8) and/or the second storage unit (6b) are designed such that the second storage unit (6b) can accommodate the loading device (8) in whole or at least in part, and
**characterized in that** the loading system (2) comprises a placement means (26) adapted to at least assist in moving the piece goods (4) during an insertion from the first storage unit (6a) into the loading area (12).

2. Loading system (2) according to claim 1, **characterized in that**
the insertion device (18) also comprises a rear wall (18a) of the loading device (8) which can be displaced in and against the insertion direction (16).

3. Loading system (2) according to one of claims 1 to 2, **characterized in that**
the placement means (26) is adapted at least to assist in moving and/or positioning and/or aligning the piece goods (4) before and/or after insertion from the first storage unit (6a) into the loading area (12).

4. Loading system (2) according to one of claims 1 to 3, **characterized in that**
the base (10) of the loading device (8) is designed to be vertically movable.

5. Loading system (2) according to one of claims 1 to 4, **characterized in that**
the loading system (2) comprises at least two side walls (28) which are adapted to support the loading unit (20), wherein the side walls (28) are designed as part of the loading device (8) and/or as part of the second storage unit (6b).

6. Loading system (2) according to one of claims 1 to 5, **characterized in that**
length and/or width and/or height of the loading device (8) are matched to the first storage unit (6a) and/or the second storage unit (6b) and/or the piece goods (4) and/or the loading unit (20).

7. Loading system (2) according to one of claims 1 to 6, **characterized in that**
the loading device (8) is designed in such a way that the base (10) of the loading device (8) can overlap or be flush with the first storage unit (6a) and/or the second storage unit (6b) and/or a unit load layer of the second storage unit (6b) for a limited or unlimited period of time, either completely or at least partially.

8. Loading system (2) according to one of claims 1 to 7, **characterized in that**
the loading system (2) comprises a control device with which the loading system (2), in particular the loading device (8) and/or the insertion device (18), can be controlled.

9. Method for transferring piece goods (4) from a first storage unit (6a) of a loading system (2) into a second storage unit (6b) of the same loading system (2) by means of a loading device (8), comprising the method steps:
a) Loading of a loading area (12) arranged above a base (10) of the loading device (8) with piece goods (4), wherein a placement means (26) transfers the piece goods (4) from the first storage unit (6a) to the loading device (8);
b) Forming a loading unit (20) of the piece goods (4) in the loading area (12);
c) Arrangement of the loading system (2) for transfer;
d) At least partial transfer of the loading unit (20) from the loading area (12) of the loading device (8) into a depositing area (14) of the second storage unit (6b) along an insertion direction (16) by means of an insertion device (18), wherein the insertion device (18) is designed as a conveyor means (18b) integrated into the base (10) of the loading device (8), which conveyor means can be driven in and/or counter to the insertion direction (16), and
for transferring the loading unit (20), the loading device (8) is completely or at least partially picked up by the second storage unit (6b).

10. Method according to claim 9, **characterized in that** before the transfer, the loading unit (20) resting on the loading device (8) is positioned above the depositing area (14) of the second storage unit (6b).

11. Method according to one of claims 9 to 10, **characterized in that**
for transfer by the insertion device (18), the loading unit (20) is moved in the insertion direction (16), while the loading device (8) is moved in the opposite direction to the insertion direction (16).

12. Method according to one of claims 9 to 11, **characterized in that**
when forming the loading unit (20), the piece goods (4) are aligned and arranged in such a way that the highest possible packing density is achieved.

13. Method according to one of claims 9 to 12, **characterized in that**
the loading unit (20) is formed in layers, wherein the loading device (8) is displaced in its entirety and/or the base (10) of the loading device (8) and/or the first storage unit (6a) is displaced vertically after a layer of piece goods has been formed.

14. Method according to one of claims 9 to 13, **characterized in that**
the loading unit (20) is additionally transferred to the depositing area (14) by displacing a rear wall (18a) surrounded by the insertion device (18).

## Revendications

1. Système de chargement (2) pour des marchandises de détail (4), en particulier pour des paquets, des envois postaux et des bagages, comprenant une première unité de stockage (6a), une deuxième unité de stockage (6b), en particulier une caisse mobile (106b), et un dispositif de chargement (8),
dans lequel
a) le dispositif de chargement (8) comprend un fond (10) et une zone de chargement (12) ;
b) la zone de chargement (12) est disposée au-dessus du fond (10) du dispositif de chargement (8) et est prévue pour recevoir les marchandises de détail (4) ;
c) le dispositif de chargement (8) est conçu comme un élément de transfert entre la première unité de stockage (6a) et la deuxième unité de stockage (6b) ;
d) la deuxième unité de stockage (6b) comprend au moins une zone de dépôt (14) ;
e) le dispositif de chargement (8) et/ou la deuxième unité de stockage (6b) sont conçus de telle sorte que le dispositif de chargement (8) peut être positionné de telle sorte que les marchandises de détail (4) peuvent être transférées selon un sens d'introduction (16) de la zone de chargement (12) vers la zone de dépôt (14) ; et
f) le dispositif de chargement (8) comprend un dispositif d'introduction (18) qui est adapté pour transférer les marchandises de détail (4), au moins partiellement sous forme d'unité à charger (20), de la zone de chargement (12) vers la zone de dépôt (14) ;
le dispositif d'introduction (18) est conçu comme un moyen de transport (18b) qui est intégré dans le fond (10) du dispositif de chargement (8) et qui peut être entraîné dans le sens d'introduction (16) et/ou en sens opposé ;
le dispositif de chargement (8) et/ou la deuxième unité de stockage (6b) sont conçus de telle sorte que la deuxième unité de stockage (6b) peut recevoir le dispositif de chargement (8) en totalité ou au moins en partie, **caractérisé en ce que**
le système de chargement (2) comprend un moyen de mise en place (26) adapté pour au moins aider à déplacer les marchandises de détail (4) de la première unité de stockage (6a) vers la zone de chargement (12) pendant l'introduction.

2. Système de chargement (2) selon la revendication 1,
**caractérisé en ce que**
le dispositif d'introduction (18) comprend en outre une paroi arrière (18a) du dispositif de chargement (8), laquelle peut être déplacée dans le sens d'introduction (16) et en sens opposé.

3. Système de chargement (2) selon l'une des revendications 1 à 2,
**caractérisé en ce que**
le moyen de mise en place (26) est adapté pour au moins aider à déplacer les marchandises de détail (4) de la première unité de stockage (6a) vers la zone de chargement (12), et/ou à les positionner et/ou à les orienter, avant et/ou après une introduction.

4. Système de chargement (2) selon l'une des revendications 1 à 3,
**caractérisé en ce que**
le fond (10) du dispositif de chargement (8) est conçu de manière à pouvoir être déplacé verticalement.

5. Système de chargement (2) selon l'une des revendications 1 à 4,
**caractérisé en ce que**
le système de chargement (2) comprend au moins deux parois latérales (28) adaptées pour supporter l'unité à charger (20), les parois latérales (28) étant conçues comme faisant partie du dispositif de chargement (8) et/ou comme faisant partie de la deuxième unité de stockage (6b).

6. Système de chargement (2) selon l'une des revendications 1 à 5,
**caractérisé en ce que**
la longueur et/ou la largeur et/ou la hauteur du dispositif de chargement (8) sont adaptées à la première unité de stockage (6a) et/ou à la deuxième unité de stockage (6b) et/ou aux marchandises de détail (4) et/ou à l'unité à charger (20).

7. Système de chargement (2) selon l'une des revendications 1 à 6,
**caractérisé en ce que**
le dispositif de chargement (8) est conçu de telle sorte que le fond (10) du dispositif de chargement (8) peut chevaucher ou affleurer en totalité ou au moins en partie la première unité de stockage (6a) et/ou la deuxième unité de stockage (6b) et/ou une couche de marchandises de détail de la deuxième unité de stockage (6b), et ce de manière limitée ou illimitée dans le temps.

8. Système de chargement (2) selon l'une des revendications 1 à 7,
**caractérisé en ce que**
le système de chargement (2) comprend un dispositif de commande permettant de commander le système de chargement (2), en particulier le dispositif de chargement (8) et/ou le dispositif d'introduction (18).

9. Procédé de transfert de marchandises de détail (4) d'une première unité de stockage (6a) d'un système de chargement (2) vers une deuxième unité de stockage (6b) du même système de chargement (2) au moyen d'un dispositif de chargement (8), comprenant les étapes de procédé consistant à :
a) charger une zone de chargement (12), disposée au-dessus d'un fond (10) du dispositif de chargement (8), avec des marchandises de détail (4), un moyen de mise en place (26) assurant un transfert des marchandises de détail (4) de la première unité de stockage (6a) sur le dispositif de chargement (8) ;
b) former une unité à charger (20) des marchandises de détail (4) dans la zone de chargement (12) ;
c) agencer le système de chargement (2) pour le transfert ;
d) transférer au moins en partie l'unité à charger (20) de la zone de chargement (12) du dispositif de chargement (8) vers une zone de dépôt (14) de la deuxième unité de stockage (6b) selon un sens d'introduction (16) au moyen d'un dispositif d'introduction (18),
dans lequel
le dispositif d'introduction (18) est conçu comme un moyen de transport (18b) qui est intégré dans le fond (10) du dispositif de chargement (8) et qui peut être entraîné dans le sens d'introduction et/ou en sens opposé, et
pour transférer l'unité à charger (20), le dispositif de chargement (8) est reçu en totalité ou au moins en partie par la deuxième unité de stockage (6b)

10. Procédé selon la revendication 9,
**caractérisé en ce que**
avant le transfert, l'unité à charger (20) reposant sur le dispositif de chargement (8) est positionnée au-dessus de la zone de dépôt (14) de la deuxième unité de stockage (6b).

11. Procédé selon l'une des revendications 9 à 10,
**caractérisé en ce que**
pour le transfert par le dispositif d'introduction (18), l'unité à charger (20) est déplacée dans le sens d'introduction (16), tandis que le dispositif de chargement (8) est déplacé en sens opposé au sens d'introduction (16).

12. Procédé selon l'une des revendications 9 à 11,
**caractérisé en ce que**
lors de la formation de l'unité à charger (20), les marchandises de détail (4) sont orientées et disposées de manière à obtenir une densité d'emballage aussi élevée que possible.

13. Procédé selon l'une des revendications 9 à 12,
**caractérisé en ce que**
la formation de l'unité à charger (20) s'effectue par couches, et, après la formation d'une couche de marchandises de détail, le dispositif de chargement (8) dans son ensemble et/ou le fond (10) du dispositif de chargement (8) et/ou la première unité de stockage (6a) est déplacé(e) verticalement.

14. Procédé selon l'une des revendications 9 à 13,
**caractérisé en ce que**
l'unité à charger (20) est transférée vers la zone de dépôt (14) en supplément par déplacement d'une paroi arrière (18a) que comprend le dispositif d'introduction (18).
